# EUROPÄISCHE PATENTSCHRIFT

(11) **EP 1 175 110 B1**
(45) Veröffentlichungstag und Bekanntmachung des Hinweises auf die Patenterteilung: **26.03.2008**
(21) Anmeldenummer: 01115327.7
(22) Anmeldetag: 25.06.2001
(51) Int. Cl.: H04Q 3/62, H04L 12/28, H04M 11/06

(54) **Nebenstellenanlage zur Kopplung von Datennetzen**
Private branch exchange for coupling data networks
Auto-commutateur privé pour relier des réseaux de données

(30) Priorität: 19.07.2000 DE 10035167
(43) Veröffentlichungstag der Anmeldung: 23.01.2002
(73) Patentinhaber: Siemens Enterprise Communications GmbH & Co. KG, 81379 München (DE)
(72) Erfinder: Bebko, Thomas, 59174 Kamen (DE); Krug, Wilfried, Dr., 58452 Witten (DE); Winkelmann, Michael, 44807 Bochum (DE)
(74) Vertreter: Maier, Daniel Oliver

(56) Entgegenhaltungen:
- WO-A-98/54901
- DE-U1- 29 918 150
- US-A- 4 785 448
- US-A- 5 960 066

## Beschreibung

Die Erfindung betrifft eine Nebenstellenanlage zur Kopplung von Datennetzen, die eine eigentlich für andere Zwecke vorgesehene Verkabelung, wie z.B. eine Telefonverkabelung oder eine Verkabelung zur Stromversorgung, als Übertragungsmedium für Datenpakete nutzen. Ein solches Datennetz wird häufig auch als Home-Network bezeichnet.

Die Home-Networking-Technologie wird gegenwärtig zur Vernetzung von Datenverarbeitungseinrichtungen insbesondere im Heimbereich propagiert. Die Datenverarbeitungseinrichtungen werden dazu über eine eigentlich für andere Zwecke vorgesehene Verkabelung gekoppelt. Durch die Nutzung einer bereits bestehenden Verkabelung, wie z.B. einer hauseigenen Telefon-und/oder Stromversorgungsverkabelung, ist zur Vernetzung von Datenverarbeitungseinrichtungen innerhalb des Bereichs der bestehenden Verkabelung kein zusätzliches Verlegen von Verbindungskabeln erforderlich. Eine Verwendung von hauseigener Telefonverkabelung zur Vernetzung von Datenverarbeitungseinrichtungen ist beispielsweise aus der WO 98/54901 und aus der US 5,960,066 bekannt.

Zur Datenübertragung zwischen den auf diese Weise vernetzten Datenverarbeitungseinrichtungen werden zu übertragende Datenpakete in Signale außerhalb eines im Rahmen der eigentlichen Zweckbestimmung der Verkabelung genutzten Frequenzbereichs kodiert und in die Verkabelung eingespeist. Beim Home-Networking über eine bestehende Telefonverkabelung wird beispielsweise ein vom Telefoniedienst nicht genutzter Frequenzbereich von 5,5 MHz bis 9,5 MHz zur Übertragung von Datenpaketen genutzt, so daß gleichzeitig über die Telefonverkabelung geführte Telefongespräche davon nicht beeinträchtigt werden.

Beim Aufbau komplexer Datennetze mittels der Home-Network-Technologie stellt sich häufig das Problem, verschiedene Zweige eines Home-Networks, das heißt z.B. verschiedene telefonietechnisch getrennte Leitungen einer Telefonverkabelung, untereinander zu koppeln und/oder an ein weiterführendes Kommunikationsnetz anzukoppeln, ohne die eigentliche Funktion der als Übertragungsmedium genutzten Verkabelung zu beeinträchtigen.

Es ist Aufgabe der vorliegenden Erfindung, eine Anordnung anzugeben, die eine Verkopplung von Datennetzen, die eine eigentlich für andere Zwecke vorgesehene Verkabelung als Übertragungsmedium nutzen, und insbesondere eine Verkopplung von Home-Networks und/oder Zweigen von Home-Networks erlaubt.

Gelöst wird diese Aufgabe durch eine Nebenstellenanlage gemäß Patentanspruch 1.

Durch eine erfindungsgemäße Nebenstellenanlage können verschiedene Zweige einer Telefonverkabelung zu einem komplexen Home-Network verkoppelt werden. Eine Kopplung durch eine Nebenstellenanlage ist insofern vorteilhaft, als daß an einer für eine Anschaltung einer Nebenstellenanlage vorgesehenen Stelle eines Kommunikationssystems üblicherweise eine Vielzahl von koppelbaren Teilnehmeranschlußleitungen zusammenlaufen. Durch eine erfindungsgemäß in die Nebenstellenanlage integrierte Koppeleinrichtung zum Austausch von Home-Network-Datenpaketen zwischen verschiedenen Teilnehmeranschlußleitungen kann ein teilnehmeranschlußleitungsübergreifendes Home-Network realisiert werden.

Vorteilhafte Ausführungsformen und Weiterbildungen der Erfindung sind in den abhängigen Ansprüchen angegeben.

Nach einer vorteilhaften Weiterbildung der Erfindung kann die Koppeleinrichtung an eine Gatewayeinrichtung der Nebenstellenanlage angekoppelt sein. Die Gatewayeinrichtung dient zum Ankoppeln der Nebenstellenanlage an ein oder mehrere Kommunikationsnetze, wie z.B. an ein sogenanntes Lokales Netz (LAN: Local Area Network) oder an ein öffentliches Kommunikationsnetz. Durch den Anschluß der Koppeleinrichtung an die Gatewayeinrichtung kann das durch die Teilnehmeranschlußleitungen getragene Home-Network mit dem weiterführenden Kommunikationsnetz gekoppelt werden. Auf diese Weise kann das Home-Network beispielsweise mittels einer als Modem ausgebildeten Gatewayeinrichtung über das öffentliche Kommunikationsnetz an das Internet angekoppelt werden.

Vorzugsweise können Resourcenverwaltungsmittel vorgesehen sein, um Übertragungsresourcen, wie z.B. die jeweils verfügbare Übertragungsbandbreite oder die Dienstgüte, der jeweils gekoppelten Datennetze gemeinsam zu verwalten. Dabei können vorteilhafterweise auch für die Kommunikation mit den Endgeräten verfügbare Übertragungsresourcen in die gemeinsame Resourcenverwaltung einbezogen werden. Eine gemeinsame Resourcenverwaltung erlaubt es, die Übertragungsresourcen aller beteiligten Kommunikationseinrichtungen optimal aufeinander abzustimmen. Vorzugsweise kann zur Steuerung der gemeinsamen Resourcenverwaltung eine gemeinsame Administrationsoberfläche vorgesehen sein.

Gemäß einer vorteilhaften Ausführungsform der Erfindung ist die Koppeleinrichtung durch eine zentrale Steuereinrichtung der Nebenstellenanlage steuerbar. Auf diese Weise kann z.B. das Extrahieren und Einspeisen von Datenpaketen bzw. das Ein-und Auskoppeln der die Datenpakete repräsentierenden Signale bedarfsweise gesteuert werden.

Die Koppeleinrichtung kann vorzugsweise mittels eines digitalen Signalprozessors und/oder mittels eines sogenannten FIR-Filters (FIR: Finite Impulse Response) realisiert sein. Die Koppeleinrichtung kann außerdem auch in die zentrale Steuerung integriert sein. Weiterhin können die Koppeleinrichtung und die zentrale Steuerung zumindest teilweise mittels eines gemeinsamen integrierten Schaltkreises oder als auf einem gemeinsamen Mikroprozessor oder Mikrocontroller ablaufendes Programm-Modul realisiert sein.

Gemäß einer weiteren vorteilhaften Weiterbildung der Erfindung kann die Koppeleinrichtung eine Brücken- und/oder Routerfunktionalität aufweisen, um Datenpakete anhand einer in den Datenpaketen jeweils enthaltenen, ein Übermittlungsziel identifizierenden Adreßinformation gezielt weiterzugeben. Auf diese Weise können die zu übertragenden Datenpakete individuell zu ihrem Übermittlungsziel gelenkt werden. Die Brücken-und/oder Routerfunktionalität ist insbesondere bei einer Ankopplung an ein weiterführendes Kommunikationsnetz, wie z.B. das Internet, vorteilhaft. In diesem Fall werden durch die Koppeleinrichtung Datenpakete, die nur innerhalb des Home-Network zu übertragen sind, nicht an die in das weiterführende Kommunikationsnetz führende Gatewayeinrichtung weitergegeben, so daß diese entlastet wird.

Ein Ausführungsbeispiel der Erfindung wird nachfolgend anhand der Zeichnung näher erläutert.

Dabei zeigen jeweils in schematischer Darstellung
Fig 1 ein Kommunikationssystem mit einer ein Home-Network verkoppelnden Nebenstellenanlage und
Fig 2 eine Koppeleinrichtung der Nebenstellenanlage zum Verkoppeln des Home-Network.

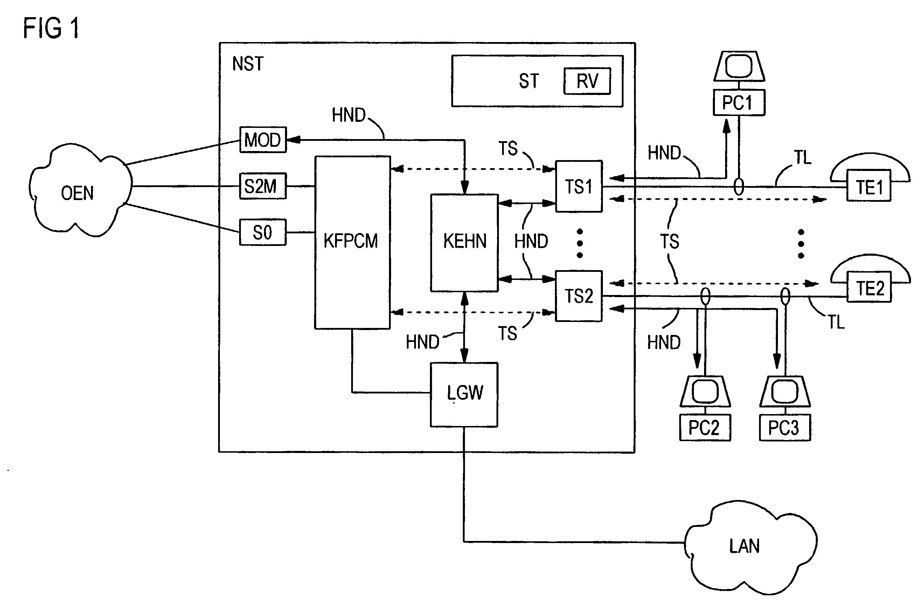

In Fig 1 ist ein Kommunikationssystem mit einer erfindungsgemäßen, an ein öffentliches Kommunikationsnetz OEN angeschlossenen Nebenstellenanlage NST schematisch dargestellt. Die Nebenstellenanlage NST verfügt über Teilnehmerschaltungen TS1,TS2,..., an die Teilnehmerendgeräte TE1,TE2,... über Teilnehmeranschlußleitungen TL angeschlossen sind. Aus Gründen der Übersichtlichkeit sind in Fig 1 nur die Teilnehmerschaltung TS1, an die eine zum Teilnehmerendgerät TE1 führende Teilnehmeranschlußleitung TL angeschlossen ist, und die Teilnehmerschaltung TS2, an die eine weitere, zum Teilnehmerendgerät TE2 führende Teilnehmeranschlußleitung TL angeschlossen ist, explizit dargestellt. Als weitere Funktionskomponenten weist die Nebenstellenanlage NST einen an ein Lokales Netz LAN angeschlossenen LAN-Gateway LGW, ein PCM-Koppelfeld KFPCM (PCM: Pulse Code Modulation), eine Koppeleinrichtung KEHN sowie eine zentrale Steuereinrichtung ST mit integrierter Resourcenverwaltung RV auf.

Die Koppeleinrichtung KEHN ist über ein in die Nebenstellenanlage NST integriertes Modem MOD, z.B. ein sogenanntes ADSL-Modem (ADSL: Asymmetric Digital Subscriber Line) oder ein sogenanntes Powerline-Modem, an das öffentliche Kommunikationsnetz OEN angekoppelt. Weiterhin ist die Koppeleinrichtung KEHN an den LAN-Gateway LGW sowie an die Teilnehmerschaltungen TS1,TS2,... angeschlossen.

Das PCM-Koppelfeld KFPCM dient im wesentlichen zum Herstellen von Telefonieverbindungen zwischen den Teilnehmerendgeräten TE1,TE2,... untereinander und zwischen den Teilnehmerendgeräten TE1,TE2,... und dem öffentlichen Kommunikationsnetz OEN oder dem Lokalen Netz LAN. Zu diesem Zweck ist das PCM-Koppelfeld KFPCM sowohl über eine S₀-Schnittstelle SO als auch über eine S_{2M}-Schnittstelle S2M der Nebenstellenanlage NST an das öffentliche Kommunikationsnetz OEN, über den LAN-Gateway LGW an das Lokale Netz LAN sowie über die Teilnehmerschaltungen TS1,TS2,... an die Teilnehmerendgeräte TE1,TE2,... gekoppelt. Im Rahmen der Telefonieverbindungen werden Telefoniesignale TS, wie durch strichlierte Doppelpfeile angedeutet, zwischen den Teilnehmerendgeräten TE1, TE2 und dem PCM-Koppelfeld KFPCM ausgetauscht. Die Telefoniesignale TS belegen - wie im Telefonieverkehr üblich - einen Frequenzbereichs von 300 Hz bis 3400 Hz.

Außer den Telefoniesignalen TS werden über die Teilnehmeranschlußleitungen TL zusätzlich Home-Network-Datenpakete HND übertragen, die von an die Teilnehmeranschlußleitungen TL angekoppelten Personalcomputern PC1, PC2 und PC3 eingespeist bzw. extrahiert werden. Für das vorliegende Ausführungsbeispiel sei angenommen, daß der Personalcomputer PC1 an die zum Teilnehmerendgerät TE1 führende Teilnehmeranschlußleitung angekoppelt ist und die Personalcomputer PC2 und PC3 an die zum Teilnehmerendgerät TE2 führende Teilnehmeranschlußleitung angekoppelt sind.

Zur Übertragung werden die Home-Network-Datenpakete HND im vorliegenden Ausführungsbeispiel in pulspositionsmodulierte Signale eines Frequenzbereichs von 5,5 - 9,5 MHz kodiert. Dieses Übertragungsverfahren wird auch als HomePNA 1.0 (PNA: Phoneline Networking Association) bezeichnet und erlaubt eine Datenübertragungsrate von 1 Mbit/s. Als Variante kann auch das leistungsfähigere Übertragungsverfahren HomePNA 2.0 eingesetzt werden, mit dem sich bei Verwendung einer Quadraturamplitudenmodulation (QAM) im Frequenzbereich von 1 - 10 MHz eine Datenübertragungsrate von 10 Mbit/s erzielen läßt. Aufgrund des großen Frequenzabstandes zwischen dem zum Übertragen der Telefoniesignale TS genutzten Frequenzbereich und dem zum Übertragen der Home-Network-Datenpakete HND genutzen Frequenzbereich beeinträchtigen sich die Telefoniesignale TS und die Home-Network-Datenpakete HND auch bei gleichzeitiger Übertragung gegenseitig nicht. Die Übertragung von Home-Network-Datenpaketen HND ist in Fig 1 mittels durchgezogener Doppelpfeile angedeutet.

Die von den Personalcomputern PC1, PC2 und PC3 zu übertragenden Home-Network-Datenpakete HND werden jeweils in die betreffende Teilnehmeranschlußleitung TL eingespeist und über diese zur Teilnehmerschaltung TS1 bzw. TS2 übertragen. Die Teilnehmerschaltungen TS1 bzw. TS2 sind transparent bezüglich des zur Übertragung der Home-Network-Datenpakete HND genutzten Frequenzbereichs von 5,5 - 9,5 MHz, so daß die Home-Network-Datenpakete HND über die Teilnehmerschaltungen TS1 oder TS2 zur Koppeleinrichtung KEHN bzw. in umgekehrter Richtung von der Koppeleinrichtung KEHN hin zu den Personalcomputern PC1, PC2 oder PC3 ungestört übertragen werden.

Durch die Koppeleinrichtung KEHN werden Home-Network-Datenpakete HND zwischen den an die Teilnehmerschaltungen TS1 und TS2 angeschlossenen Teilnehmeranschlußleitungen TL, dem Lokalen Netz LAN und dem öffentlichen Kommunikationsnetz OEN vermittelt. Die Koppeleinrichtung ermöglicht damit einen teilnehmeranschlußleitungsübergreifenden Austausch von Home-Network-Datenpaketen HND. Im vorliegenden Ausführungsbeispiel ist die Koppeleinrichtung KEHN mit Brückenfunktionalität ausgestattet; das heißt empfangene Home-Network-Datenpakete HND werden durch die Koppeleinrichtung KEHN abhängig von einer in den Home-Network-Datenpaketen HND enthaltenen Adreßinformation weitergeleitet. Ein Home-Network-Datenpaket HND wird dabei durch die Koppeleinrichtung KEHN nur zu derjenigen der Schaltungen TS1, TS2, MOD oder LGW weitergeleitet, die zum durch die Adreßinformation identifizierten Übertragungsziel hinführt. Somit werden beispielsweise Home-Network-Datenpakete HND die nur zwischen den Personalcomputern PC1 und PC2 auszutauschen sind, durch die Koppeleinrichtung KEHN nur zwischen den Teilnehmerschaltungen TS1 und TS2 ausgetauscht und nicht zum Modem MOD oder zum LAN-Gateway LGW weitergegeben. Auf diese Weise werden das Modem MOD und der LAN-Gateway LGW wesentlich entlastet.

Die Koppeleinrichtung KEHN wird von der zentralen Steuereinrichtung ST der Nebenstellenanlage NST gesteuert. Insbesondere werden die Übertragungsresourcen der Koppeleinrichtung KEHN, des Modems MOD, des LAN-Gateways LGW und des PCM-Koppelfeldes KFPCM gemeinsam durch die Resourcenverwaltung RV verwaltet. Die Resourcenverwaltung RV verwaltet damit sowohl die Übertragungsresourcen für die Telefoniesignale TS als auch die Übertragungsresourcen für die Home-Network-Datenpakete HND.

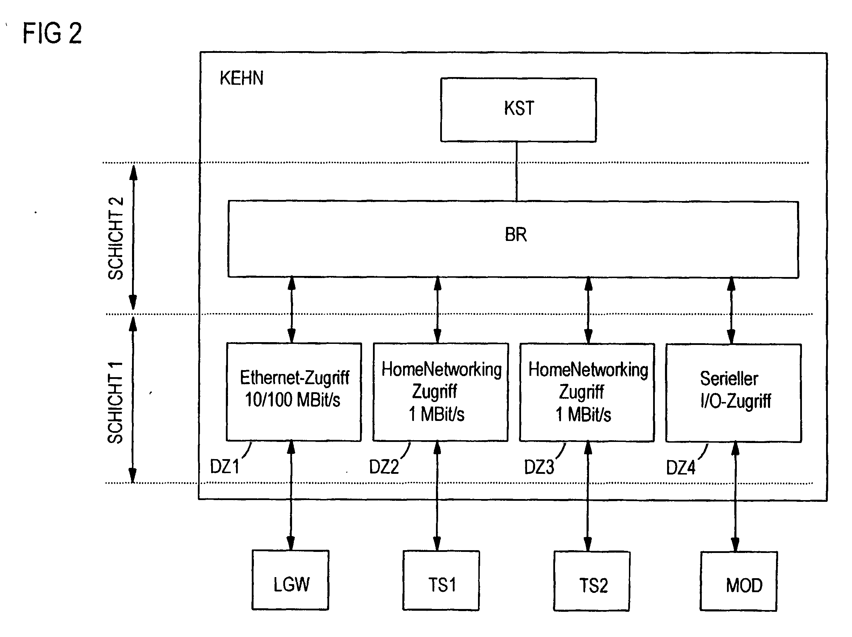

Fig 2 zeigt ein Blockdiagramm der Koppeleinrichtung KEHN. Diese weist als Funktionskomponenten eine Steuerung KSD, eine mit der Steuerung KSD verbundene Brückeneinrichtung BR sowie verschiedene Datenzugriffsbausteine DZ1, DZ2, DZ3 und DZ4 auf. Wie mittels punktierter Linien angedeutet, wirken die Datenzugriffsbausteine DZ1,...,DZ4 auf der Bitübertragungsschicht - das heißt auf Schicht 1 - des sogenannten OSI-Referenzmodells (OSI: Open System Interconnect), während die Brückeneinrichtung BR auf der Sicherungsschicht - das heißt auf Schicht 2 - des OSI Referenzmodells wirkt.

Im vorliegenden Ausführungsbeispiel dient der Datenzugriffsbaustein DZ1 zum physikalischen Zugriff gemäß dem sog. Ethernet-Protokoll auf den daran angeschlossenen LAN-Gateway LGW. Die Datenzugriffsbausteine DZ2 und DZ3 sind an die Teilnehmerschaltungen TS1 und TS2 angeschlossen und dienen zum physikalischen Zugriff auf die die Home-Network-Datenpakete HMD kodierenden Signale im Frequenzbereich von 5,5 - 9,5 MHz. Der Datenzugriffsbaustein DZ4 ist schließlich an das Modem MOD angekoppelt und dient zum seriellen Übertragen von Daten zwischen der Koppeleinrichtung KEHN und dem Modem MOD. Die Datenzugriffsbausteine DZ1,...,DZ4 haben insbesondere die Aufgabe, Präambeln von Schicht-1-Datenpaketen zu detektieren bzw. zu generieren und Kollisionen von Schicht-1-Datenpaketen auf dem jeweiligen Übertragungsmedium zu erkennen. Die Datenzugriffsbausteine DZ1,...,DZ4 werden von der Steuerung KST gesteuert, so daß Schicht-1-Datenpakete bedarfsweise ein- bzw. ausgekoppelt werden können. Aufgrund von Ähnlichkeiten zwischen dem Ethernet-Protokoll und dem Home-Networking-Protokoll können der Datenzugriffsbaustein DZ1 und die Datenzugriffsbausteine DZ2, DZ3 vorzugsweise mittels des gleichen Schaltungsbausteins, wie z.B. mittels des Tranceivers AM79C901 der Firma AMD (Advanced Micro Devices, Inc.) realisiert werden. Alternativ dazu können die Schicht-1-Datenzugriffsbausteine DZ2, DZ3 beispielsweise auch mittels des gleichermaßen für HomePNA 1.0 und HomePNA 2.0 geeigneten integrierten Schaltungsbausteins CX24611 der Fa. Conexant realisiert werden.

Die zwischen den Schaltungen LGW, TS1, TS2 und MOD auszutauschenden Home-Network-Datenpakete HMD werden von den Datenzugriffsbausteinen DZ1,...,DZ4 über eine Protokollschnittstelle zwischen Bitübertragungsschicht und Sicherungsschicht zur Brückeneinrichtung BR übertragen. Diese verfügt für jeden der Datenzugriffsbausteine DZ1,...,DZ4 über einen Pufferspeicher zum temporären Speichern eines zu übertragenden Home-Network-Datenpakets HND. Ein solcher Pufferspeicher erlaubt es, Datenpakete, die mit einer vorgegebenen Übertragungsgeschwindigkeit empfangen wurden, mit einer davon abweichenden Übertragungsgeschwindigkeit weiterzuleiten. So können beispielsweise mit einer hohen Übertragungsgeschwindigkeit von 100 Mbit/s vom LAN-Gateway LGW empfangene Datenpakete solange zwischengespeichert werden, bis sie über den vergleichsweise langsamen Home-Networking-Datenzugriffsbaustein DZ2 mit einer Übertragungsrate von 1 Mbit/s vollständig weitergegeben sind.

Durch die in der Sicherungsschicht wirkende Brückeneinrichtung BR wird eine in einem vollständig empfangenen Home-Network-Datenpaket HND enthaltene, ein Übermittlungsziel identifizierende Adreßinformation ausgewertet und abhängig davon das Datenpaket nur zu demjenigen der Datenzugriffsbausterine DZ1,...,DZ4 übertragen, der zum Übermittlungsziel hinführt. Gegebenenfalls wird dabei eine Anpassung der Übertragungsgeschwindigkeit vorgenommen.

Gemäß einer alternativen Ausführungsform der Erfindung kann eine von einer Adreßinformation abhängige Wegewahlfunktionalität anstatt durch eine Brückeneinrichtung BR auch durch eine auf der Vermittlungsschicht - das heißt Schicht 3 - des OSI Referenzumodells wirkende Router-Einrichtung (nicht dargestellt) realisiert werden. Nach einer weiteren Ausgestaltungsform kann auf die Wegewahlfunktionalität auch verzichtet werden und nur eine Repeaterfunktionalität für die Koppeleinrichtung KEHN vorgesehen sein.

Durch die Steuereinrichtung KST werden insbesondere die Übertragungsresourcen, wie z.B. die in einzelnen Übertragungskanälen verfügbare Übertragungsbandbreite oder weitere Dienstgüteparameter, verwaltet. Die Steuereinrichtung KST der Koppeleinrichtung KEHN ist vorzugsweise mit der Resourcenverwaltung RV der Nebenstellenanlage NST gekoppelt, so daß die Übertragungsresourcen für die Telefoniesignale TS und die Übertragungsresourcen für die Home-Network-Datenpakete HND gemeinsam verwaltet werden können.

## Patentansprüche

1. Nebenstellenanlage (NST) mit Teilnehmerschaltungen (TS1,TS2) zum Anschließen von Teilnehmerendgeräten (TE1,TE2)wobei über Teilnehmeranschlußleitungen (TL) jeweils ein Teilnehmerendgerät (TE1,TE2) angeschlossen ist, und wobei über die Teilnehmeranschlußleitungen (TL) auch Datenpakete (HND) übertragen werden, die in Signale außerhalb eines zur Kommunikation mit den Teilnehmerendgeräten (TE1,TE2) genutzten Frequenzbereichs kodiert sind, mit
einer an die Teilnehmerschaltungen (TS1,TS2) gekoppelten, aktiven Koppeleinrichtung (KEHN) zum Extrahieren der Datenpakete (HND) aus einer ersten der Teilnehmeranschlußleitungen (TL), und zum Einspeisen von extrahierten Datenpaketen (HND) in eine zweite der Teilnehmeranschlußleitungen (TL), wobei die Teilnehmerschaltungen (TS1,TS2) die Signale zur kodierten Übertragung der Datenpakete (HND) zu bzw. von der Koppeleinrichtung (KEHN) transparent übertragen,
**dadurch gekennzeichnet,**
**daß** die Koppeleinrichtung (KEHN)
- in die Nebenstellenanlage (NST) integriert ist,
- zu ihrer Steuerung an eine zentrale Steuereinrichtung (ST) der Nebenstellenanlage (NST) angekoppelt ist, und
- Zugriff auf in der zentralen Steuereinrichtung (ST) vorliegende, nebenstellenanlageninterne Signalisierungsinformation hat.

2. Nebenstellenanlage nach Anspruch 1,
**dadurch gekennzeichnet,**
**daß** die Teilnehmerschaltungen (TS1,TS2) für den zum Transport der Datenpakete (HND) genutzten Frequenzbereich transparent' sind.

3. Nebenstellenanlage nach Anspruch 1 oder 2,
**dadurch gekennzeichnet,**
**daß** die Koppeleinrichtung (KEHN) an eine Gatewayeinrichtung (MOD,LGW) der Nebenstellenanlage zum Anschließen eines weiterführenden Kommunikationsnetzes (OEN,LAN) gekoppelt ist, um Datenpakete (HND) zwischen dem weiterführenden Kommunikationsnetz (OEN,LAN) und den Teilnehmeranschlußleitungen (TL) auszutauschen.

4. Nebenstellenanlage nach Anspruch 3,
**dadurch gekennzeichnet,**
**daß** die Gatewayeinrichtung ein Modem (MOD) ist.

5. Nebenstellenanlage nach Anspruch 3 oder 4,
**dadurch gekennzeichnet,**
**daß** das weiterführende Kommunikationsnetz ein öffentliches Kommunikationsnetz (OEN) ist.

6. Nebenstellenanlage nach Anspruch 3,
**dadurch gekennzeichnet ,**
**daß** das weiterführende Kommunikationsnetz ein Lokales Netz (LAN) ist.

7. Nebenstellenanlage nach einem der vorhergehenden Ansprüche,
**dadurch gekennzeichnet,**
**daß** die zentrale Steuereinrichtung (ST) Resourcenverwaltungsmittel (RV) zum gemeinsamen Verwalten von für die Datenpakete (HND) verfügbaren Übertragungsresourcen und für die Kommunikation mit den Endgeräten (TE1,TE2) verfügbaren Übertragungsresourcen aufweist.

8. Nebenstellenanlage nach einem der vorhergehenden Ansprüche,
**dadurch gekennzeichnet,**
**daß** die Koppeleinrichtung (KEHN) Brücken- und/oder Routerfunktionalität aufweist zum gezielten Weitergeben der Datenpakete (HND) abhängig von einer in den Datenpaketen (HND) jeweils enthaltenen, ein Übermittlungsziel identifizierenden Adreßinformation.

## Claims

1. Private branch exchange (NST) with subscriber circuits (TS1, TS2) for connecting subscriber terminals (TE1, TE2), in which in each case a subscriber terminal (TE1, TE2) is connected via subscriber lines (TL), and in which data packets (HND) which are coded into signals outside a frequency range used for communication with the subscriber terminals (TE1, TE2) are also transmitted via the subscriber lines (TL), with an active interconnecting device (KEHN), which is coupled to the subscriber circuits (TS1, TS2), for extracting the data packets (HND) from a first one of the subscriber lines (TL) and for injecting extracted data packets (HND) into a second one of the subscriber lines (TL), in which the subscriber circuits (TS1, TS2) transparently transmit the signals for the coded transmission of the data packets (HND) to or from the interconnecting device (KEHN), respectively,
**characterized in that**,
the interconnecting device (KEHN)
- is integrated into the private branch exchange (NST),
- in order to be controlled, is coupled to a central processor (ST) of the private branch exchange (NST), and
- has access to private-branch-exchange-internal signaling information present in the central processor (ST).

2. Private branch exchange according to claim 1, **characterized in that** the subscriber circuits (TS1, TS2) are transparent for the frequency range used for transporting the data packets (HND).

3. Private branch exchange according to claim 1 or 2, **characterized in that** the interconnecting device (KEHN) is coupled to a gateway device (MOD, LGW) of the private branch exchange for connecting an ongoing communication network (OEN, LAN) for exchanging data packets (HND) between the ongoing communication network (OEN, LAN) and the subscriber lines (TL).

4. Private branch exchange according to claim 3, **characterized in that** the gateway device is a modem (MOD).

5. Private branch exchange according to claim 3 or 4, **characterized in that** the ongoing communication network is a public communication network (OEN).

6. Private branch exchange according to claim 3, **characterized in that** the ongoing communication network is a local area network (LAN).

7. Private branch exchange according to one of the preceding claims, **characterized in that** the central processor (ST) has resource administration means (RV) for jointly administering transmission resources available for the data packets (HND) and transmission resources available for the communication with the terminals (TE1, TE2).

8. Private branch exchange according to one of the preceding claims, **characterized in that** the interconnecting device (KEHN) has bridge and/or router functions for selectively forwarding the data packets (HND) in dependence on address information in each case contained in the data packets (HND) and identifying a transmission destination.

## Revendications

1. Autocommutateur privé (NST) comprenant des circuits d'abonnés (TS1, TS2) pour le raccordement de terminaux d'abonné (TE1, TE2), à chaque fois un terminal d'abonné (TE1, TE2) étant raccordé au moyen de lignes de raccordement d'abonnés (TL), et également des paquets de données (HND), qui sont codés en signaux à l'extérieur d'une gamme de fréquences utilisée pour la communication avec les terminaux d'abonné (TE1, TE2), étant transmis par les lignes de raccordement d'abonnés (TL), un dispositif de couplage (KEHN) actif et couplé avec les circuits d'abonnés (TS1, TS2) pour l'extraction des paquets de données (HND) à partir de la première des lignes de raccordement d'abonnés (TL), pour l'injection de paquets de données (HND) extraits dans la seconde des lignes de raccordement d'abonnés (TL), les circuits d'abonnés (TS1, TS2) transmettant de façon transparente les signaux pour la transmission codée des paquets de données (HND) au dispositif de couplage resp. à partir du dispositif de couplage (KEHN),
**caractérisé en ce que**
le dispositif de couplage (KEHN) est
- intégré dans l'autocommutateur privé (NST), et
- rattaché pour sa commande à un dispositif de commande central (ST) de l'autocommutateur privé (NST), et
- a accès à de l'information de signalisation présente dans le dispositif de commande central (ST) et interne à l'autocommutateur privé.

2. Autocommutateur privé selon la revendication 1,
**caractérisé en ce que**
les circuits d'abonnés (TS1, TS2) sont transparents pour la gamme de fréquences utilisée pour le transport des paquets de données (HND).

3. Autocommutateur privé selon la revendication 1 ou 2,
**caractérisé en ce que**
le dispositif de couplage (KEHN) est couplé à un dispositif passerelle (MOD, LGW) de l'autocommutateur privé pour le raccordement d'un réseau de communication (OEN, LAN) ultérieur, afin d'échanger des paquets de données (HND) entre le réseau de communication (OEN, LAN) qui continue et les lignes de raccordement d'abonnés (TL).

4. Autocommutateur privé selon la revendication 3,
**caractérisé en ce que**
le dispositif passerelle est un modem (MOD).

5. Autocommutateur privé selon la revendication 3 ou 4,
**caractérisé en ce que**
le réseau de communication ultérieur est un réseau de communication public (OEN).

6. Autocommutateur privé selon la revendication 3,
**caractérisé en ce que**
le réseau de communication ultérieur est un réseau local (LAN).

7. Autocommutateur privé selon l'une quelconque des revendications précédentes,
**caractérisé en ce que**
le dispositif de commande central (ST) présente des moyens de gestion de ressources (RV) pour la gestion commune de ressources de transmission disponibles pour les paquets de données (HND) et pour la communication avec les terminaux (TE1, TE2).

8. Autocommutateur privé selon l'une quelconque des revendications précédentes,
**caractérisé en ce que**
le dispositif de couplage (KEHN) présente une fonctionnalité de pont et/ou de routeur pour la transmission ciblée des paquets de données (HND) en fonction d'une information d'adresse contenue dans chacun des paquets de données (HND) et identifiant une cible de transmission.
